# EUROPEAN PATENT APPLICATION

(11) **EP 2 509 035 A1**
(43) Date of publication of application: **10.10.2012**
(21) Application number: 11305390.4
(22) Date of filing: 05.04.2011
(51) Int. Cl.: G06Q 10/00, G06Q 50/00

(54) **Reservation method and system with improved PNR handling**

(71) Applicant: Amadeus S.A.S., 06410 Biot (FR)
(72) Inventor: Pelissier, Marc, 06330, Roquefort les Pins (FR); Charrat, Christel, 06220, Vallarius (FR); Ledroit, Francois, 06250, Mougins (FR); Brun, Pierre, 06220, Golfe Juan (FR); Gadeyne, Pierre, 06370, Mouans Sartoux (FR)
(74) Representative: Anderson, Angela Mary

(57) **Abstract**

The method and system according to a preferred embodiment of the present invention allows storing and proposing a list of saved quotes, referred to as "Offers", together with the PNR. These Offers once created can be communicated to the passenger, so he could access them and make his choice in a cross-channel, interactive dialog with the proposing agent. Standard PNR have been enhanced to accommodate quotations / offers on top of firm bookings. As well as making the search efforts of the user persistent and re-usable, the inclusion of quotation in the PNR makes them accessible via all the distribution channels and gives to this invention a full cross-channel dimension. This new functionality represents as well a huge enhancement in the Travel Agent work flow, since the saving of all the pre-booking activity is now automated and traceable, by the agent himself (for follow-up and confirmation purpose) and eligible for sending to commonly used Mid-Office and reporting systems.

## Description

### Field of the invention

The present invention relates to the field of travel reservation systems, more particularly to a method and system for managing pre-booking elements (quote) without modifying the PNR basic structure.

### Background of the invention

Travel reservation systems usually offer to their customers the possibility of browsing several options and simulating travel arrangements by combining different components (e.g. a flight reservation plus a car rental and a hotel booking). It is often the case that the decision is taken after a plurality of options are compared in term of total prices, convenience of arrangements and many other factors. These pre-booking activities constitute about half of the daily Travel Agent workload. There is however a lack of appropriate tools to optimize this complex phase of the reservation process in terms or productivity, and enable the persistence of pre-booking data for further business analysis.

A key dimension of pre-booking activities is the management of "quotes" to be proposed and shared with the traveler in a cross-channel context. Regardless whether these "quotes" are pure informational material intended for decision making by the passenger, a means to create counter-proposals or to simply capture a verbally expressed wish, there is today a clear lack of appropriate functionality to facilitate those.

Besides, corporate agents are also contractually bound, on certain markets, to propose alternatives to created bookings, and require automated means to store, share and follow-up these alternatives - only clumsy, script-based or pure workflow-integrated workarounds are available to address these requirements, with no integrated means to capture and use pre-booking data for further business intelligence.

Also considerations about possible budget restrictions impose a rigorous operational management: strict criteria must be proposed for pre-booking activity traceability, performance measurement and resources optimization.

The collected information is also meant to be eligible for statistical and reporting usage, so as to elaborate Business Intelligence on this pre-booking information, by both travel suppliers and Travel Agencies.

One of the main complexities comes from the need to be cross channel to allow Agents and Customers from anywhere to share pre-booking information. The solution should preferably be central but saved itineraries cannot be stored in the same way as sold itineraries. The same for prices, the system cannot save them in the same way than real price that lead to a ticket. A full new solution has to be imagined to answer this problematic.

Another possible issue is the need to handle different kind of itineraries, not only Air segments, with the same flow for end users. Currently, within global distribution systems, bookings and reservations are stored in a Passenger Name Record. Nevertheless, this PNR does not allow the storage of itinerary parts that haven't been booked firmly yet, such as quotes. As a consequence all the pre-booking data consolidation and sending to the customers is usually valid for the duration of the opened PNR session, or is manually added in the PNR via the cumbersome usage of free-flow remarks in particular. To fill this gap, state of the art remote systems have developed their own solution, which remains "local", and not integrated to key entities like mid-office systems, data warehouses, and does not allow an integrated follow-up. Finally, due to this difficulty to store this quote information, the process to convert them into firm booking is not a straightforward transformation and normally relies on a totally manual process which lacks automation.

Patent application US-2002/0152100 discloses a method for providing access to several computer reservation systems (CRSs) simultaneously. As a result, travel agencies and on-line travel service providers can simultaneously connect all the CRSs to provide many proposals to the end-user to choose the more appropriate travel item segments such as an air segment, a car segment, a hotel segment. When an end-user wants to book at least one travel item segment, a Super Passenger Name Record stores data related to the travel item segment as booked by the end-user. The end-user can access the Super Passenger Name Record to modify the stored travel item segment.

Patent application US2003/0144867 discloses a method and system for providing a travel network for improving the efficiency of the bookings for an end-user. Point Of Service (POS) terminals or application systems with web based user interface are also connected to the network to provide access to the Global Distribution System (GDS) for the end-users. Each POS terminal or application provides access to at least a Super Passenger Name Record which stores travel reservation information such as historical data referring to all the previously booked trips.

The two above cited prior art documents describe an improved PNR which combines multi channel reservations into one single "super PNR", but do not solve the problem of handling offers (i.e. non-finalized bookings) into the same structured process. On the other hand, other existing systems handle the management of trip offers to help customers in selecting their travel arrangements; however there is no integration between PNRs and trip offers. As an example, patent application WO2008/090530 discloses a method and system for improving the management of travel expenses between a traveler, a travel agent and the supplier of the travel, by handling trip offers. Firstly, the traveler has to create a proposal of a trip as well as indicating the corresponding budget. Such data is then stored in a specific database. A travel agent can access this database locally to carry out the booking of the corresponding stored trip proposal.

It would be therefore highly appreciated a solution which can bridge these gaps with a central, cross-channel facility to store and communicate "quotes" or "counter-proposals", possibly integrated with a reservation system capable of transforming a quote into a firm booking and enabling automated reports for analysis and business intelligence.

### Object of the invention

An object of the present invention is to alleviate at least some of the problems associated with the prior art systems.

According to one aspect of the present invention there is provided a method for improving efficiency in travel pre-booking enquiries in a multi-channel reservation system including an interface module, the interface module being accessible by a plurality of travel channels, each channel offering travel reservation services to users, the reservation system having access to a plurality of travel servers, each server providing availability information on at least one travel resource, the method including the steps of: the reservation system receiving from one of the travel channels, through the interface module a user request including a PNR data record and at least one travel availability enquiry; the reservation system creating a clone PNR data record including the same fields of the PNR data record; enriching the clone PNR data record with information obtained by at least one of the plurality of travel servers according to the travel availability enquiry; responsive to a user input, modifying the PNR data record information according to the corresponding fields in the clone PNR data record; returning, through the interface module, a response associated to the at least one travel availability enquiry requested by the user.

The method according to a preferred embodiment of the present invention allows storing and providing a list of saved quotes, referred to as "Offers", together with the PNR. These Offers once created can be communicated to the passenger, so he could access them and make his choice in a cross-channel, interactive dialog with the proposing agent.

Standard PNR have been enhanced to accommodate quotations / offers on top of firm bookings, while keeping a PNR face to end-user lifting the constraint on PNR structure that do not allow natively anything else than booking. As well as making the search efforts of the user persistent, and re-usable, the inclusion of quotation in the PNR, makes them accessible via all the distribution channels and give to this invention a full cross-channel dimension.

This new functionality represents as well a huge enhancement in the Travel Agent work flow, since the saving of all the pre-booking activity can be automated and made traceable, by the agent himself (for follow-up and confirmation purpose) and eligible for sending to commonly used Mid-Office and reporting systems.

Another advantageous feature of a preferred embodiment of the present invention is the multi product aspect of the quotations. Indeed, given that a PNR can hold booking of different product types: Cars, Hotels, Insurance, Rail and Air, quotation can as well be created and stored on all these products. The technical container where quotations would fit in had then to accommodate both common data across quotes and all different product specificities. One can even integrate in the PNR, as a booking reference or as a quote, products not directly distributed by the GDS. The multiple steps of the pre-booking/booking flow can be started in any of the travel channels, be continued in another and finalized in the initial one or another channel.

Also interesting is the aggregate that one can build when sharing in the same record (i.e. PNR) bookings and quotations. Indeed, thanks to this invention, Distribution System can allow the user to build set of bookings and offers.

According to a second aspect of the present invention there is provided a system comprising one or more components adapted to perform the method described above.

According to a further embodiment of the present invention there is provided a computer program comprising instructions for carrying out the method described above when said computer program is executed on a computer system.

### Brief description of drawings

Reference will now be made, by way of example, to the accompanying drawings, in which:
Figure 1 is a diagram of the reservation system in accordance with one embodiment of the present invention;
Figure 2 is a diagram of a general computer system adapted to support the method of a preferred embodiment of the present invention;
Figure 3 shows the software components of a system implementing a preferred embodiment of the present invention
Figure 4 is a diagram of a clone PNR used in the method according to a preferred embodiment of the present invention;
Figure 5 is a flow chart of the method steps of a process, in accordance with one embodiment of the present invention.

### Detailed description of the embodiments

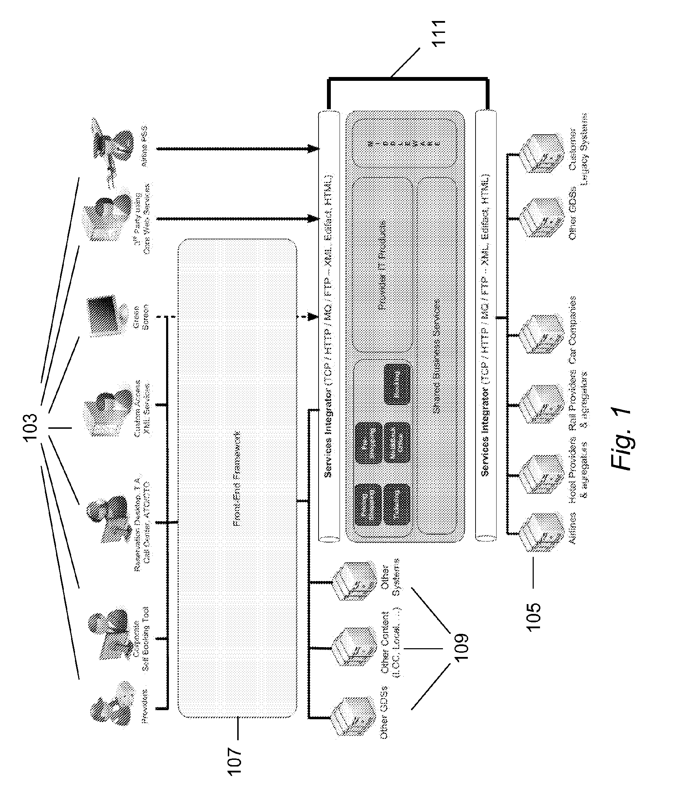

Figure 1 shows a reservation system suitable to implement the method and system according to a preferred embodiment of the present invention. A central travel Reservation Server 101 is accessible through a network by a plurality of Client modules 103 (also called Channels) which allow access to travel agents and/or end customers to the reservation system. The Reservation Server 101 has access, through a network (e.g. the Internet), to a plurality of Provider Inventory Databases 105 where information of various travel arrangements can be retrieved to build an offer and/or a reservation for the customers. Provider Inventory Databases 105 include several possible kinds of travel arrangements: flight, hotels, train, rental cars and so on. Bookings are normally handled by means of data records called Passenger Name Record (PNR) which are universally accepted as a sort of standard in reservation systems. Each Provider Inventory Databases 105 includes at least one server adapted to retrieve travel information and to perform travel reservation activities. One of the advantages of the present invention is that the additional information on non-final bookings (i.e. the offers) is handled in a transparent way for the external users, without modifying the existing PNRs. On the other hand, user of the system according to a preferred embodiment of the present invention will be able to view the bookings and the offers information as one single object through what we call clone PNR. This allows to easily plug the offers in the central system and define an offer as a new PNR element in the clone. Central system will then contain both PNR and PNR look-alike (the clone). The system according to a preferred embodiment as shown in Figure 1 also includes a Front-End Framework (or Server) 107 is in charge of managing business logic and customization for all channels products 103 and handles the page flows and necessary data transformation and mapping for exchanges between Client modules 103 and central Reservation Server 101. Also a number of external servers 109 can be accessed by the Front-End Server 107: these external servers 109 can provide additional contents which are not assessable by the Reservation Server 101 through Provider Inventory Databases 105. In a preferred embodiment of the present invention a Service Integrator 111 is also provided. Service Integrator 111 can be for example an Enterprise Application Integration (EAI) bus (e.g. the one developed by Amadeus SA) or an Enterprise Service Bus (ESB) which routes all inter server communications, maintains session context and allows independence on communication protocols. It routes the Front-End Server 107 requests or external servers (e.g. Clients 103) requests through web services to back-end servers hosting services as well as from central Reservation Server 101 to the Provider Inventory Databases 105.

The PNR clone is an easy way to solve problems inherent to offers:
- Existing applications (feeds, billing, etc) do not need to be changed to make a distinction between PNR and offer as long as they are trigged with only the original part (PNR)
- Data structure of price, itinerary and their interactions are already available at no cost, for all kind of itineraries and prices.

This feature allows a seamless integration of offers, or any new container reusing PNR data, without the need of building a whole new infrastructure. In order to benefit from the current architecture, for canceling element, for committing elements, in a preferred embodiment of the present invention a feature can be added to swap between clones. This can be fully hidden from the user (e.g. a Travel Agent) perspective. The Agent sees the set of clones as a single functional entity although different displays can be built, one for the legacy PNR, another for a clone. The commands like cancel of an element are kept generic thanks to a swap feature as well as keeping an indicator of the active clone. This allows to the entity receiving the generic cancel command to know in which sub part of the context an element should be cancelled.

Pre-booking information can now be stored and followed-up in a fully integrated manner: Offers are PNR-integrated elements stored as "previews" of a potential future booking, capturing availability and pricing information, with no guarantee of price nor availability: no commitment from the traveler, agent or provider

This full integration enables a high flexibility in the handling and aggregation with other parts of the trip - bookings and Offers already part of a same PNR.

Being integrated to the Amadeus PNR Offers benefits from existing services available for PNR and can also be integrated in PNR specific features such as itinerary generation, email sending, PNR history, data export via existing accounting messages etc.

Reservation system of Amadeus IT Group SA is an example of such a reservation system platform wherein a method according to a preferred embodiment of the present invention can be implemented. The reservation system according to a preferred embodiment of the present invention is organised according to a client/server architecture, wherein the reservation server receives customer requests by a plurality of client modules, each client module acting on behalf of one of the different travel content providers. Communications within the system and towards external systems are done according to a Service Oriented Architecture (SOA) standard which is a well known protocol for exchanging information among systems through a network and for accessing services (e.g. web services).

One of the main aspects of the method according to a preferred embodiment of the present invention is the ability to deal with multiple channels and with several different providers. This is ensured by the flexibility of SOA which represents an underlying structure supporting communications among services. Offers are designed to address key cross-channel scenarios, involving interactive trip elaboration between the agent and the customer: online applications such as for example Amadeus E-Travel Management allow users to view and confirm or reject Offers made for them by an Agent.

The integrated management of offers as central services available at any stage of the pre-booking process allows any follow-up actions (availability re-check, confirmation, claims ...) to be handled by any channels. Confirmation for example could be performed by the traveler directly through his web based tool or performed by the travel agent who receives instructions to do so via mail or SMS or simple calls.

The storage of Offers in Amadeus will enable the sending of pre-booking information to selected data warehouses, repositories and mid-office systems, to enable reporting and further business analysis on pre-booking behaviors and activity.

The generation of standard reports to serve the needs of mid-size agencies, for tracking and analysis of the pre-booking activity of their employees is also in the scope of the Amadeus Offers solution.

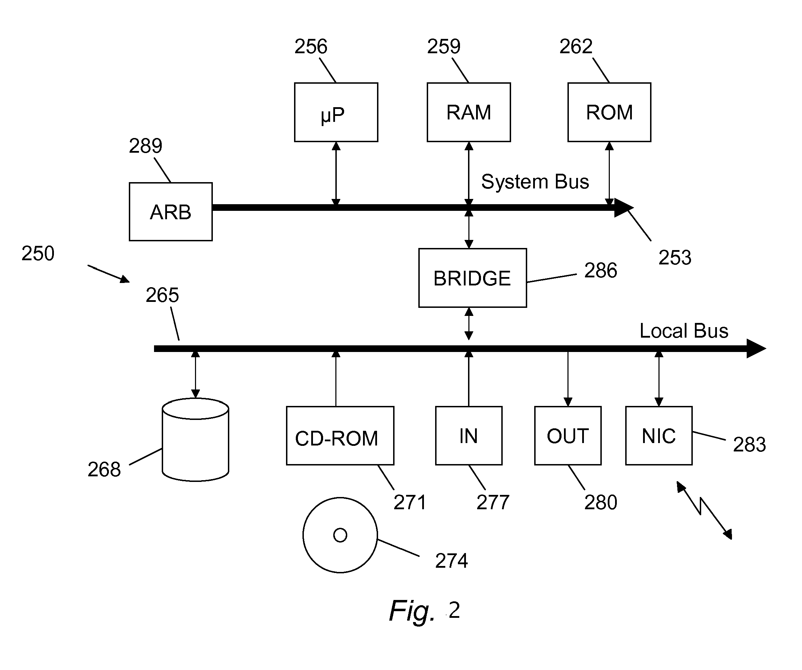

With reference to Figure 2 a generic computer of the system (e.g. computer, Alliance module server, data base management subsystem, router, network server) is denoted with 250. The computer 250 is formed by several units that are connected in parallel to a system bus 253. In detail, one or more microprocessors 256 control operation of the computer 250; a RAM 259 is directly used as a working memory by the microprocessors 256, and a ROM 262 stores basic code for a bootstrap of the computer 250. Peripheral units are clustered around a local bus 265 (by means of respective interfaces). Particularly, a mass memory consists of a hard-disk 268 and a drive 271 for reading CD-ROMs 274. Moreover, the computer 250 includes input devices 277 (for example, a keyboard and a mouse), and output devices 280 (for example, a monitor and a printer). A Network Interface Card 283 is used to connect the computer 250 to the network. A bridge unit 286 interfaces the system bus 253 with the local bus 265. Each microprocessor 256 and the bridge unit 286 can operate as master agents requesting an access to the system bus 253 for transmitting information. An arbiter 289 manages the granting of the access with mutual exclusion to the system bus 253. Similar considerations apply if the system has a different topology, or it is based on other networks. Alternatively, the computers have a different structure, include equivalent units, or consist of other data processing entities (such as PDAs, mobile phones, and the like).

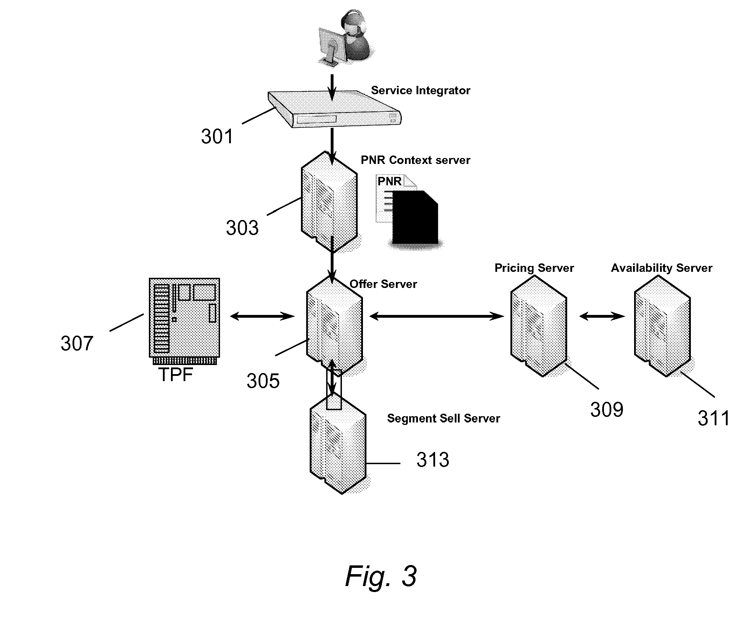

As shown in Figures 3 the software components of an architecture implementing a method of the present inventions are shown. A service integrator 301 is an entry point of reservation system (e.g. Amadeus reservation infrastructure) according to a preferred embodiment of the present invention. The incoming reservation query is received by the PNR Context server 303 which is in charge of holding the reservation context during the agent session. This entity is aware of both the traditional PNR content (firm booking) and the quote content. If the incoming query relates to Quotes, it is forwarded to an Offer Server 305 and reservation context is provided to the Offer Server 305. According to a preferred embodiment of the present invention, the Offer Server 305 is in charge of the integration of all needed services as well as the management of pure quote data (status of quotes, validity, security checks, etc). Offer Server 305 will address the request to the suitable server according to the user needs as specified in the received query. In a preferred embodiment of the present invention the servers communicating with and providing services to the Offer Server 305 are e.g. a legacy system TPF 307, a Pricing Server 309, an Availability Server 311 (which in the described embodiment can be accessed through the Pricing Server 309) and Segment Sell Server 313. For example, during the most automated user query (i.e. confirming offers and transforming into bookings), the Offer Server 305 performs calls in a specific order. It first requests a price check by Pricing Server 309 and availability recheck by Availability Server 311. If price has not changed and seat (or room or any other reservation element) is still available, the Offer Server 305 then requests the booking to the Segment Sell Server 313 which leads to booking creation registered in a PNR on TPF legacy system 307 and Clone update. The Offer Server 305 then communicates again with the Pricing Server 309 to price the newly created booking with the same pricing context parameters as the offers. The Offer Server 305 finally updates the Clone status and confirms the successful operation to the end user through the PNR Context Server 303 and the Service Integrator 301.

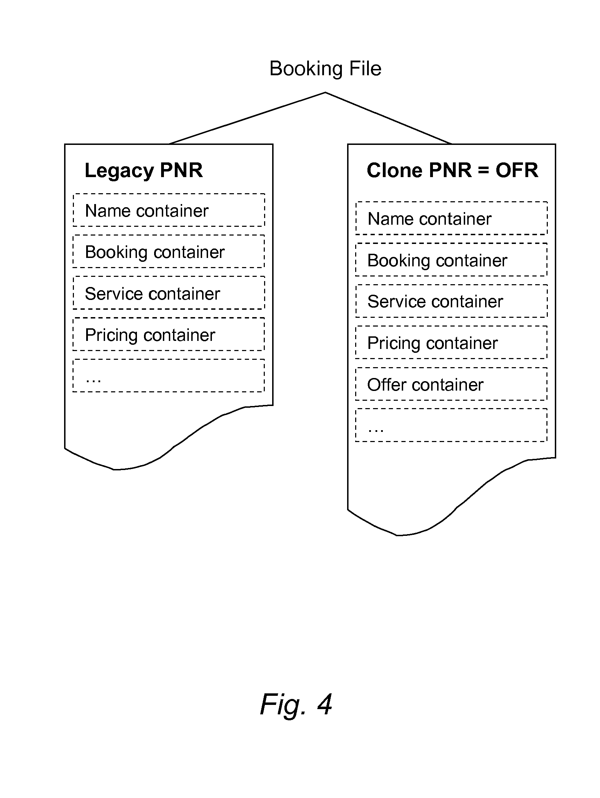

In figure 4 the structure of the Booking File according to a preferred embodiment of the present invention is described

As shown in Figure 4 the offer section in the clone PNR can include:
- a Status (i.e. Active, Unavailable, etc.)
- a Validity Date (and time if necessary)

Flight and price information is stored as in the legacy PNR, using the same data containers, and are linked with an element of the Offer section.

The aim of the offer is to get as close as possible from a booking to provide reliable quotation, without the PNR full check constraints. An offer is an item proposition, i.e. a set availability and quotation, made to the End-user before booking, with no guarantee of price and availability. From the Customer point of view, it can be considered as a snapshot of the Travel Agency proposal at a given moment.

Offers are materialised as an element of the clone PNR by:
- An offer Header, with the total price
- Product details which is nothing but a standard Hotel or Car segment or a set of segments for Air or Rail with fewer data (no confirmation number...)
- A Pricing Record, stored behind the scene, as for a Transitional Stored Ticket for example.

Once an offer has been created, it can be at any time:
- Retrieved and displayed
- Re-validated - availability and price are checked
- Confirmed - when end user wants to turn the offer into a firm booking
- Rejected
- Cancelled

All offers, whatever product they are based on, are then stored within the Clone PNR. Since offers and bookings are stored within the same underline data structure and are homogeneous, it is possible to create set of products (either stored as booking or offers). The End-User can then build several combinations, compare them etc...Functionally, an offer is an element of a Clone PNR, also called Booking File. A Booking File can even contain only offers and no bookings.

Offers have been implemented as complete elements similar to bookings and persistent elements of the Booking File, stored in Central System

The offers centralization allows having a unique process making them accessible via all the distribution channels; ideally PNR should be enhanced to fit with all web shopping constraints so that a full cross-channel dimension is realized. It means that offers created in cryptic can be retrieved and modified in web services flows. This new functionality represents as well a huge enhancement in the Travel Agent work flow, since the saving of all the pre-booking activity is now automated and re-usable.

It means that, whatever is the channel, the Travel Agent or the traveller himself can, in one-click:
- Retrieve and display an offer
- Check automatically the availability and price of an offer
- Transform an offer into booking
- Delete an offer

The persistence and the centralization of the offers lead to a harmonization and consistency of the process in all the channels. The automatic check of availability and price or the offer confirmation is done in the same way whatever the channel is. Furthermore, incorporation of Offers within the PNR allows providing features mixing firm booking and offers. The traveller can be provided with a full view of the reservation. Emails generated to the traveller gather a summary of both the firm booking and all his offers. Furthermore, the industry, both the distribution and the providers, can easily access very useful reporting data that will help them understanding the shoppers' behaviour and getting closer to their customer expectation

One of the advantages of the method and system according to a preferred embodiment of the present invention is that customers can be assisted all along their shopping experience, during the pre-booking activity as well as for the firm booking, for air products as well as for car, hotel or any other product or ancillary service. The present solution smoothly integrates the offer creation within different booking flows.

Let's consider as an example the case where Hotel and Car reservations are combined together in the same PNR. The pricing is embedded in the availability transaction. One can even retrieve this for AIR segments in Fare Search Transactions (such as Master Pricer Expert). Indeed the output of Car / Hotel Availabilities or MPE transactions consists in a list of product availabilities combined with quotation. Therefore a new "Create offer" transaction will be introduced as a subsequent transaction to directly store those recommendations within offers.

On the other hand, for Rail or Standard Air booking flow, the end-user usually goes through a step of itinerary construction, flight or segment selection, before seeking for the appropriate pricing. Once those two steps have been performed, the end-user has now the choice between continuing his booking process or storing its itinerary and associated pricing thanks to the same "Create offer" transaction.

Implementing the same entry and interface to create offers no matter what the product is induces a homogenization of the offer creation flow among all the different products, the aim being to make things easier for the Travel Agent or customer.

The cross-channel aspect of the method according to a preferred embodiment of the present invention is realized by the offer structure which can easily accommodate both:
- a common element, that stores the offer status, a total price and even pricing details
- a product description with each product type peculiarities.

If the product description remains specific, it remains as well very close to a standard booking so that the User can retrieve all the useful information he is used to get. Sharing a common format for some generic quotation data enables different manipulation such as Offers comparison between each other, which is a significant improvement in decision support. An additional possible use of these common data is the constitution of set of offers that we call proposal. Those proposals allow the user to gathers offers or firm booking constituting a whole itinerary so that he can have a complete view of its full itinerary and an idea of the global cost of his request. From there, User can has well manipulate offers bundled within a single proposal by confirming, cancelling, re-checking all the offers included in a given proposal.

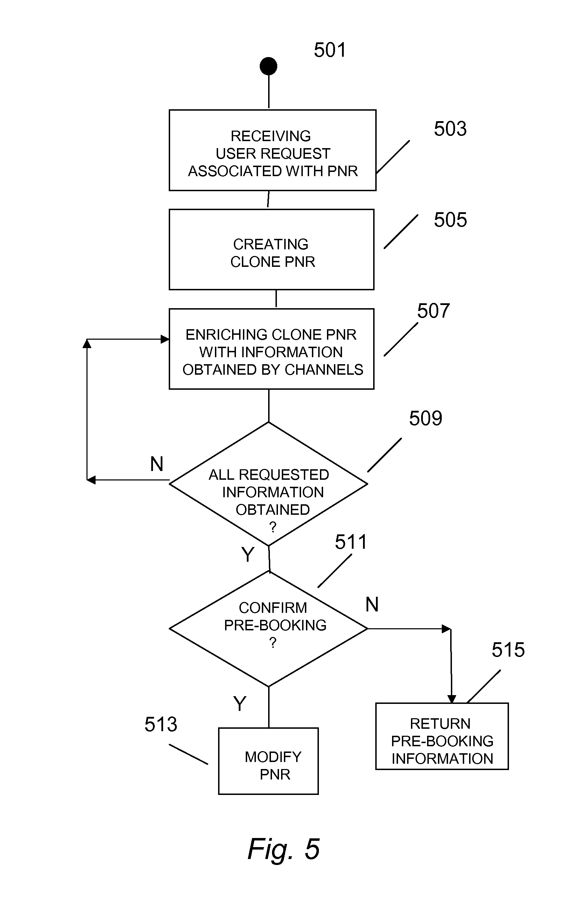

The method according to an embodiment of the present invention described above is also represented in the diagram shown in figure 5. The method aims at improving efficiency in travel pre-booking enquiries in a multi-channel reservation system, the reservation system including a single access interface module and an offer server having access to a plurality of travel channels, each channel providing availability information on at least one travel resource; the method begins at black circle 501 and then goes to box 503 where a user request is received by the system through the single access interface module, e.g. the Service Integrator 301 described at Figure 3. The system then creates a clone PNR as described above (step 505). The clone PNR replicates the structure of the "real" PNR, possibly with additional fields, e.g. a Status field and a Validity Date field as described above. It is the clone PNR which is enriched with the information obtained from the plurality of Channels (step 507) until the user request has been fully satisfied (step 509). The user has the option to turn the collected pre-booking information into a real reservation (steps 511 and 513). In the present flow diagram this user choice is shown as subsequent to all the pre-booking enquiry steps, however this can be done at any time as explained above. It is not necessary that the pre-booking information result into a real booking, in such case the clone PNR is returned to the user which can use the information in a later stage.

It will be appreciated that alterations and modifications may be made to the above without departing from the scope of the disclosure. Naturally, in order to satisfy local and specific requirements, a person skilled in the art may apply to the solution described above many modifications and alterations. Particularly, although the present disclosure has been described with a certain degree of particularity with reference to preferred embodiment(s) thereof, it should be understood that various omissions, substitutions and changes in the form and details as well as other embodiments are possible; moreover, it is expressly intended that specific elements and/or method steps described in connection with any disclosed embodiment of the disclosure may be incorporated in any other embodiment as a general matter of design choice.

Similar considerations apply if the program (which may be used to implement each embodiment of the disclosure) is structured in a different way, or if additional modules or functions are provided; likewise, the memory structures may be of other types, or may be replaced with equivalent entities (not necessarily consisting of physical storage media). Moreover, the proposed solution lends itself to be implemented with an equivalent method (having similar or additional steps, even in a different order). In any case, the program may take any form suitable to be used by or in connection with any data processing system, such as external or resident software, firmware, or microcode (either in object code or in source code). Moreover, the program may be provided on any computer-usable medium; the medium can be any element suitable to contain, store, communicate, propagate, or transfer the program. Examples of such medium are fixed disks (where the program can be pre-loaded), removable disks, tapes, cards, wires, fibres, wireless connections, networks, broadcast waves, and the like; for example, the medium may be of the electronic, magnetic, optical, electromagnetic, infrared, or semiconductor type.

In any case, the solution according to the present disclosure lends itself to be carried out with a hardware structure (for example, integrated in a chip of semiconductor material), or with a combination of software and hardware.

## Claims

1. A method for improving efficiency in travel pre-booking enquiries in a multi-channel reservation system including an interface module, the interface module being accessible by a plurality of travel channels, each channel offering travel reservation services to users, the reservation system having access to a plurality of travel servers, each server providing availability information on at least one travel resource, the method including the steps of:
- the reservation system receiving from one of the travel channels, through the interface module a user request including a PNR data record and at least one travel availability enquiry;
- the reservation system creating a clone PNR data record including the same fields of the PNR data record;
- enriching the clone PNR data record with information obtained by at least one of the plurality of travel servers according to the travel availability enquiry;
- responsive to a user input, modifying the PNR data record information according to the corresponding fields in the clone PNR data record;
- returning, through the interface module, a response associated to the at least one travel availability enquiry requested by the user.

2. The method of claim 1 wherein the enriched data structure can be shared among the plurality of channels and reused for future enquiries.

3. The method of any preceding claim wherein availability information includes information on price.

4. The method of any preceding claim wherein the clone PNR data record includes an indication of a validity date, indicative of a time thresholds after which the step of modifying the PNR data record information according to the corresponding fields in the clone PNR data record is no longer possible.

5. The method of any preceding claim wherein the interface module is a single access interface module.

6. The method of any preceding claim wherein the interface module includes an Enterprise Service Bus (ESB) or an Enterprise Application Integration bus (EAI).

7. The method of any preceding claim wherein the communications within the reservation system and among the reservation system, the channels, through the interface module and the travel servers are done by means of messages according to Service Oriented Architecture (SOA).

8. A reservation method including the method of any preceding claim wherein the reservation method provides the option of transforming a response associated to the at least one travel availability enquiry requested by the user into a travel booking.

9. A computer program comprising instructions for carrying out the steps of the method according to any preceding claim, when said computer program is executed on a computer.

10. A computer program product including computer readable means embodying the computer program of claim 9.

11. A reservation data processing system, for improving efficiency in travel pre-booking enquiries in a multi-channel reservation system including an interface module, the interface module being accessible by a plurality of travel channels, each channel offering travel reservation services to users, the reservation system having access to a plurality of travel servers, each server providing availability information on at least one travel resource, wherein the system comprises one or more components adapted to perform the method of any claim 1 to 8.

12. The reservation data processing system of claim 11 wherein the plurality of travel channels communicates one each other and the enriched data structure can be shared among the plurality of channels and reused for future enquiries.

13. A service deployed in a data processing system for implementing the method of any claim 1 to 8.
